Europäisches Patentamt

European Patent Office

Office européen des brevets

(11) Publication number: **0 054 328**
**B1**

(12) **EUROPEAN PATENT SPECIFICATION**

(45) Date of publication of patent specification: **18.07.84**

(51) Int. Cl.³: **B 01 D 9/00**

(21) Application number: **81201339.9**

(22) Date of filing: **08.12.81**

(54) A crystallization apparatus and method for the formation of crystals in a such apparatus.

(30) Priority: **12.12.80 NL 8006766**

(43) Date of publication of application:
**23.06.82 Bulletin 82/25**

(45) Publication of the grant of the patent:
**18.07.84 Bulletin 84/29**

(84) Designated Contracting States:
**AT BE CH DE FR GB IT LI LU NL SE**

(56) References cited:
**DE - A - 2 625 296**

(73) Proprietor: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague (NL)**

(72) Inventor: **Arkenbout, Gerardus Johannes**
**Laan van Vollenhove 374**
**NL-3706 AA Zeist (NL)**
Inventor: **Brouwer, Johan Gerrit Henricus**
**Kol. Michaelstraat 54**
**NL-1411 VP Naarden (NL)**
Inventor: **Van Kuijk, Albert**
**Brugakker 10-18**
**NL-3704 KT Zeist (NL)**
Inventor: **Van Der Meer, Johannes**
**Kon. Wilhelminaweg 17**
**NL-3632 EV Loenen a/d Vecht (NL)**
Inventor: **Schneiders, Leonardus Hubertus Jan Maria**
**Laan van Vollenhove 128**
**NL-3706 AA Zeist (NL)**

(74) Representative: **van der Beek, George Frans et al, Nederlandsch Octrooibureau Johan de Wittlaan 15 P.O. Box 29720**
**NL-2502 LS Den Haag (NL)**

Courier Press, Leamington Spa, England.

## Description

The invention relates to a crystallization apparatus for the formation of crystals from a melt or a solution, which is provided with a cooling surface and means to vibrate the cooling surface ultrasonically with a frequency of 10—50 kHz.

Purifications and concentrations play an important part in the chemical industry. The purity of starting materials is subject to ever increasing requirements. In some instances purities of more than 99.99% are required.

Known purification methods are distillation, extraction and crystallization.

In principle the application of crystallization offers a number of advantages with respect to those of distillation, that is to say the separating action of the process is often larger upon crystallization than upon distillation, the operating temperature is in general lower and the energy consumption is less.

For an industrial application of crystallization it is of importance that the formation of crystals takes place with high velocities, for example 200—500 kg/m².hour, because in this way the volume of the installation and consequently also the installation costs related to the product output may be kept sufficiently limited.

For the formation of crystals from a melt heat has to be removed. Generally the heat is withdrawn from the system indirectly by means of a heat exchanger.

The formation velocity of crystals at a cooling surface generally is limited by:
— attaching of crystals to a cooling surface, and
— insufficient heat transport through the interface layer as the result of the low heat conducting coefficient of organic liquids.

The crystals having grown onto the cooling surface mostly are loosened by scraping. For a description thereof reference is made to A. J. Armstrong "Cooling Crystallization and Flow Patters in Scraped-Surface Crystallizers", The Chemical Engineer 1979, pages 685—687.

In these crystallization apparatus the stream behaviour of the melt is of the streamline flow nature. To control the crystallization process, the temperature difference between the wall and the melt is kept low (<5°C). As a result of this the crystal formation velocities generally are limited to about 30 kg/m².hour.

In US—A—3,389,974 a process is described, wherein the attachment of crystals from inorganic salts obtained from a solution is avoided by vibrating the cooling means with a low frequency (50 Hz according to the example).

As is known, crystals from inorganic salts, obtained from a solution, attach much less strongly to a cooling surface than organic crystals. It was ascertained by experiments that this method is not usable for the crystallization of organic compounds, like naphthalene and acetic acid, from the melt, certainly when formation velocities of >10 kg/m².hour are required.

In US—A—3,513,212 a process is described, wherein the cooling surface is vibrated ultrasonically with a frequency of 0.5—100 kHz. Vide also: M. J. Ashley "Preventing deposition on heat exchange surfaces with ultrasound" Ultrasonics, pages 215—221.

By ultrasonically vibrating the heat exchanger as well the heat transport is enlarged as the possibility of attaching of the crystals to the cooling surface is reduced. By this measure for para-xylene crystal grow velocities up to 150 kg/m².hour are possible.

By the ultrasonic crystallization attachment is only avoided if the temperature difference between the wall and the melt is kept low. When this temperature difference exceeds a certain value then though attachment occurs. The admissible temperature difference is strongly dependent on the system.

In the crystallization of organic compounds from the melt the capacity is mostly limited by the heat transfer through the interface layer of the organic material at the cooling surface. For many organic liquids the heat conducting coefficient is about 600 joule/hour.m² (°C/m).

The number of kg of crystals, which is formed per surface and per time unit, is determined by the heat conductive capacity, the thickness of the interface layer, the temperature difference over the interface layer and the melt heat, like indicated in the following equation:

$$\emptyset = \frac{k\,\Delta T}{d\,\Delta H}$$

$\emptyset$ = kg crystals/m².hour

k = heat conductive coefficient:joule/hour.m² (°C/m)
d = thickness of the interface layer:m
$\Delta T$ = temperature difference over the interface layer:°C
$\Delta H$ = melt heat:joule/kg.

From this it follows that for an ultrasonic crystallization of para-xylene, wherein $\emptyset$ = 150 kg/m².hour, $\Delta T$ = 2°C, k = 600 joule/m².hour (°C/m) and $\Delta H$ = 170 kJ/kg, an interface layer of not more than $5 \times 10^{-5}$ is obtained.

Although attachment of crystals can be reasonably avoided by the use of ultrasonic crystallization, especially when the pureness of the material to be crystallized does not have to be higher than <95% by weight, though also limitations will appear.

Regularly it is found, that the crystals attach to each other on a certain distance around the cooling surface, so that the removal of the crystals from the cooling coil to the main mass of the liquid stagnates. This layer of crystals being attached to each other also forms a barrier for the heat transport to the cooling surface.

The formation of the crystal conglomerates is also made possible by the very limited radius of action of the ultrasonic waves in the melt as the result of the strong reflection of ultrasonic waves in organic compounds.

Standard methods of stirring (like with the help of blade stirrers, turbine stirrers and propeller stirrers) appear to be not satisfactory to remove these crystal conglomerates.

According to the invention it was found, that this interfering formation of crystal conglomerates, which envelop the cooling surface, can be avoided when the crystallization apparatus is provided with means to vibrate the cooling surface aside from ultrasonically also low frequently.

Preferably the frequency of the low frequent vibration is 0.1—100 Hz. The amplitude of the low frequent vibration is preferably 0.001—5 mm.

The invention is also directed to a process for loosening crystals from the surface, at which they are formed, like the cooling surface of a crystallization apparatus, wherein said cooling surface is vibrated ultrasonically with a frequency of 10—50 kHz and the cooling surface is also vibrated with a low frequency. Therein preferably a low frequent vibration of 0.1—100 Hz is used, while further preferably an amplitude of 0.001—5 mm is used. This process can also be used to prevent undesired crystal formation.

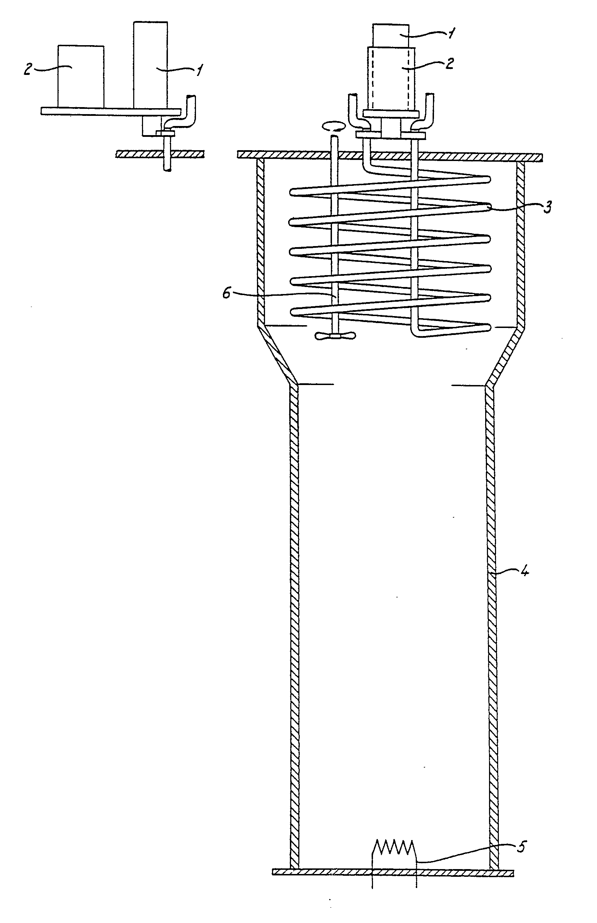

The invention is further illustrated herein below by reference to the figure and the following examples and comparing examples.

From the comparing examples 1—2 and 3—4 and the examples I and II it appears clearly, that by using the process according to the invention a synergistic effect was obtained which could not be expected.

The figure renders a crystallization apparatus according to the invention, wherein at the same time as well ultrasonic as low frequency vibration of the cooling surface is used.

In a glass container (4) having a length of 500 mm and a diameter at the top of 150 mm and at the lower side of 80 mm, a cooling coil (3) is present. This cooling coil, for instance prepared from stainless steel, has a total tube length of 1800 mm, a tube diameter of 15 mm and therefore a surface of 800 cm². This cooling coil is stiffly fixed at the top with as well a magnetostrictive transducer (1) as with a pneumatic vibrator (2) (frequency range 25—50 Hz, amplitude 0—3 mm). The transducer is ultrasonically vibrated with an ultrasonic generator (frequency 20,000 Hz, capacity 200 W). Through the cooling coil cooling liquid derived from a cooling apparatus is pumped.

In the centre there is a shaft (6) provided with a number of four propeller blades (diameter 50 mm, interspace 80 mm, uppermost propeller just under coil) for promoting the removal of crystals, which are loosened from the coil, to the lowest part of the container.

At the lower side of the container there is an electrical heating (5) to melt the crystals.

The present crystallization apparatus can also be used in the crystallization columns according to the Dutch Patent Applications 70,16632 (now Patent Specification 158,709) and 80,00906 (EP—A—0.034.852, published 2.9.81).

Comparing Example 1

In the apparatus described herein above a series of crystallization experiments was carried out with a mixture of xylenes, containing about 80% para-xylene, as starting material.

The cooling coil was only vibrated ultrasonically (frequency 20,000 Hz, capacity 200 W).

The number of rounds per minute of the stirrer was 200 and the velocity of the cooling liquid was about 20 1/min.

By reducing the temperature of the cooling liquid to some degrees below the crystallization temperature of the mixture crystals were formed.

From the temperature difference between cooling liquid going in and out and the velocity of the cooling liquid the amount of heat withdrawn from the crystal production could be derived.

The capacity of the electrical heating at the bottoms of the column indicated how many crystals were molten. The amount of heat withdrawn at the top corresponded with the amount of heat supplied at the bottom of the column.

The cooling of the crystallization apparatus and the heating at the bottom side of the column were so adjusted to each other that during the experiments between the crystallization apparatus and the bottom of the container a dense crystal packing could be maintained. In this way care could be taken to maintain the mixing in longitudinal direction sufficiently low and to use the supplied heat at the bottom side for the melting of the crystals and the withdrawn heat at the top for the formation of the crystals.

A series of experiments was carried out, wherein the temperature in each subsequent experiment was adjusted one or some degrees lower.

In the beginning more crystals were formed, according as the temperature was further lowered. At a certain temperature of the cooling liquid a maximal crystal production was reached. By further reducing the temperature of the cooling liquid a network of crystals around the cooling coil was formed. The temperature difference between cooling liquid going in and going out became less and therewith the heat withdrawal and the crystal production.

When the temperature of the cooling liquid was further reduced the envelopment became thicker and thicker and the heat withdrawal lower. Finally the crystal production stopped totally.

The maximally possible crystal production appeared under these conditions to be about 12 kg per hour. This corresponds with a velocity of 150 kg/m².hour.

### Comparing Example 2

In the same apparatus as in comparing example 1 a second series of crystallization experiments with the same starting material was carried out. The cooling coil was now not ultrasonically but only low frequently vibrated by means of a pneumatic vibrator. The number of rounds per minute of the stirrer was again 200. Under these conditions the maximal crystal production was less than 1 kg per hour (<12.5 kg/m².hour).

### Example I

Para-xylene was crystallized under corresponding conditions as in the comparing examples 1 and 2. Only now the cooling coil was vibrated as well ultrasonically (20,000 Hz, max. capacity 200 W) as low frequently (25 Hz, amplitude 3.5 mm). The maximal crystal production under these conditions appeared to be about 40 kg/hour. This corresponds with a crystal production velocity of 500 kg/m².hour. Comparison of this result with the result of comparing example 1 teaches, that also using the low frequent vibration makes a well three times higher crystal production possible.

### Comparing Example 3

About 95% acetic acid was crystallized in a way as described in comparing example 1. When the cooling coil was only vibrated ultrasonically the maximal crystal production for this acetic acid sample was about 6 kg/hour (75 kg/m².hour).

### Comparing Example 4

About 95% acetic acid was crystallized corresponding to the process as described in comparing example 2. It appeared that no significant crystal production could be obtained when the cooling coil was only vibrated low frequently.

### Example II

About 95% acetic acid was crystallized corresponding to the process of example I. If the cooling coil was vibrated as well ultrasonically as low frequently, a maximal production of about 11 kg per hour (137.5 kg/m².hour) was obtained. This crystal production velocity is about two times higher than according to the comparing example 3 was obtained.

## Claims

1. Crystallization apparatus for the formation of crystals from a melt or a solution, which is provided with a cooling surface and means to vibrate the cooling surface ultrasonically with a frequency of 10—50 kHz, characterized in that the crystallization apparatus is provided with means to vibrate the cooling surface also at low frequency.

2. Crystallization apparatus according to claim 1, characterized in that the low frequency vibration is 0.1—100 Hz.

3. Crystallization apparatus according to claim 1 or 2, characterized in that the amplitude of the low frequency vibration is 0.001—5 mm.

4. A process for loosening crystals from the cooling surface of a crystallization apparatus, wherein said cooling surface is vibrated ultrasonically with a frequency of 10—50 kHz, characterized in that the cooling surface is also vibrated with a low frequency.

5. The process of claim 4, characterized in that a low frequency vibration of 0.1—100 Hz is used.

6. The process according to claim 4 or 5, characterized in that an amplitude of the low frequency vibration of 0.001—5 mm is used.

## Patentansprüche

1. Kristallisationsvorrichtung zur Ausbildung von Kristallen aus einer Schmelze oder einer Lösung, mit einer kühlenden Oberfläche und mit einer Einrichtung, um die kühlende Oberfläche in ultraschallschwingende Bewegung zu versetzen mit einer Frequenz von 10 bis 50 kHz, dadurch gekennzeichnet, daß die Kristallisationsvorrichtung mit einer Einrichtung versehen ist, um die kühlende Oberfläche auch bei einer niedrigen Frequenz in Schwingung zu versetzen.

2. Kristallisationsvorrichtung nach Anspruch 1, dadurch gekennzeichnet, daß die Niederfrequenzschwingung 0,1 bis 100 Hz beträgt.

3. Kristallisationsvorrichtung nach Anspruch 1 oder 2, dadurch gekennzeichnet, daß die Amplitude der Niederfrequenzschwingung 0,001 bis 5 mm beträgt.

4. Verfahren zum Trennen von Kristallen von der kühlenden Oberfläche einer Kristallisationsvorrichtung, bei welcher die kühlende Oberfläche in Ultraschallschwingungen mit einer Frequenz von 10 bis 50 kHz versetzt wird, dadurch gekennzeichnet, daß die kühlende Oberfläche auch mit Niederfrequenz in Schwingung versetzt wird.

5. Verfahren nach Anspruch 4, dadurch gekennzeichnet, daß eine Niederfrequenzschwingung von 0,1 bis 100 Hz verwendet wird.

6. Verfahren nach Anspruch 4 oder 5, dadurch gekennzeichnet, daß eine Amplitude der Niederfrequenzschwingung von 0,001 bis 5 mm verwendet wird.

## Revendications

1. Appareil de cristallisation pour la formation de cristaux à partir d'un produit fondu ou d'une solution, lequel est pourvu d'une surface de refroidissement et de moyens pour faire vibrer la surface de refroidissement de façon ultrasonique avec une fréquence de 10 à 50 kHz, caractérisé en ce que l'appareil de cristallisation est pourvu de moyens pour faire vibrer la surface de refroidissement également à basse fréquence.

2. Appareil de cristallisation selon la revendication 1, caractérisé en ce que la vibration de basse fréquence est 0,1 à 100 Hz.

3. Appareil de cristallisation selon la revendication 1 ou 2, caractérisé en ce que l'amplitude de la vibration à basse fréquence est de 0,001 à 5 mm.

4. Un procédé pour détacher les cristaux de la surface de refroidissement d'un appareil de cristallisation, dans lesquels on fait vibrer ladite surface de refroidissement de façon ultrasonique avec une fréquence de 10 à 50 kHz, caractérisé en ce que l'on fait également vibrer la surface de refroidissement au moyen d'une basse fréquence.

5. Le procédé de la revendication 4, caractérisé en ce que l'on utilise une vibration à basse fréquence de 0,1 à 100 Hz.

6. Le procédé selon la revendication 4 ou 5, caractérisé en ce que l'on utilise une amplitude de vibration à basse fréquence de 0,001 à 5 mm.